(19) Europäisches Patentamt

European Patent Office

Office européen des brevets

(11) **EP 1 394 801 A1**

(12) **EUROPEAN PATENT APPLICATION**

(43) Date of publication:
03.03.2004 Bulletin 2004/10

(51) Int Cl.$^7$: **G11B 27/30**, G11B 20/10

(21) Application number: 02292123.3

(22) Date of filing: 28.08.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicants:
• DEUTSCHE THOMSON-BRANDT GMBH
78048 Villingen-Schwenningen (DE)

• Thomson Licensing S.A.
92648 Boulogne Cedex (FR)

(72) Inventors:
• Bäumle, Jürgen
79790 Küssaberg (DE)
• Brunheim, Rüdiger
78089 Unterkirnach (DE)
• Ramirez, Rosario
D-78052. Villingen-Schwenningen (DE)

(54) **Subcode and sector synchronization for a data processing system**

(57) Data synchronization between a data processing system (3) and a servo-system (1) for an apparatus for reading from and/or writing to optical recording media. A method is provided for synchronizing the subcode time codes and sector addresses of data contained on a recording medium. The method comprises the steps of:

- sending (4) a number of sectors from the micro controller (1) to the data processing system (3);
- requesting (8) information about the sector headers of the received sectors from the data processing system (3); and
- calculating (9) the difference between the subcode time codes and the sector addresses using the information about the sector headers.

Fig. 1

EP 1 394 801 A1

# EP 1 394 801 A1

**Description**

The present invention relates to the data synchronization between a data processing system and a servo-system for an apparatus for reading from and/or writing to optical recording media.

In recent years an increasing need has been experienced for providing consumer electronic devices, like e. g. compact disc players, DVD-players and others, with the capability of processing audio data stored as audio files in a compressed (e.g. MP3 or MP3 Pro, WMA (Windows Media Audio)) or uncompressed (e.g. WAV (Waveform Audio File)) data format on a storage medium. In contrast to an Audio Processing System according to prior art, which can only read and/or write audio information according to the Compact Disc Standard (Red Book), an advanced data processing system (DPS) capable of playing back and/or recording audio files in a compressed or uncompressed data format, needs to be able to extract, decode, and convey data related to the file system and the audio files stored on a storage medium.

A CD (compact disc) decoder IC with embedded compressed audio decoding shall comprise two primary systems: An advanced data processing system (DPS) and a servo system (performing servo, data path and control operations). The servo system contains a master micro controller.

Throughout the description, the following definitions are used:

Sector, Subcode address:
All sector addresses and subcode time codes (sections) are represented in the form min:sec:frame. The minutes field is represented by "min", the seconds field is represented by "sec", the blocks (sector) or frames (subcode) field is represented by "frame".

Session:
An area on a disc consisting of a Lead-In Area followed by a Program Area and a Lead-Out Area is called session.

Single session disc:
If a disc contains one session, this disc is called a single session disc.

Multisession disc:
If a disc contains more than one session, this disc is called a multisession disc.

Sector:
Whenever the term "sector" is used in this document, it has the identical meaning as the term "block" in the CD-ROM system description.

DPS:
(Advanced) Data Processing System. An example for such a data processing system is an advanced audio processing system, a module responsible for the extraction and interpretation of digital data tracks (Digital Tracks, as defined in ECMA-130) in a storage medium, as well as decoding and playback of compressed audio data contained in the digital data tracks.

The DPS uses sectors (sector addresses) as its basic data structure while the servo system uses subcode-frames (sections).

The ECMA-130 standard provides the following definitions for sector and section of a compact disc:

A sector is the smallest addressable part of the information area that can be accessed independently.
A section (subcode-frame) is defined as a group of 98 F3-frames containing a complete table of control bytes. A table is generated with the control bytes of each subcode-frame (section). The content of this table is renewed every 1/75 second, which is the same rate at which the subcode-frames are being processed. The table of control bytes of a subcode-frame defines the following channels: p-, q-, r-, s-, t-, u-, v- and w-channel of 96 bits each. The receiving end has particular interest in the q-channel that conveys, among others, information about the absolute time (subcode time code) of the section in the A-FRAC, A-SEC and A-MIN fields. These fields contain the absolute time in 75th of a second as a continuation of the time specified in the A-xxx fields of the q-channel of the preceding section.
The address of a sector is recorded in the sector header. The address of the first sector with user data of an information track is written in the table of contents of the disc.
The sector header conveys the address of a sector as an absolute time. At the encoder end, this address is inserted just before the sector enters a Cross Interleaved Reed-Solomon (CIRC) encoder.

According to the ECMA 130 standard, the nominal value of a sector shall be equal to the absolute time recorded in the control bytes of that subcode-frame which is being processed by the 8-to-14 encoder at the time the sync word of the sector enters the CIRC encoder.

It is also stated in the ECMA-130 standard that the address of the sectors has no prescribed relation to the address (subcode time code) of the sections, due to the fact that the mapping of a sector to the sections during recording is implementation dependent (ECMA-130 Standard, clause 16, F1 Frame). For this reason synchronization between sectors and subcode-frames is required at the receiving end.

The decoder IC servo system processes the q-channel of the subcode-frames. The micro controller has access to the q-channel data. Through this it has access to the CD's table of content. The table of content entries point to the start of information tracks on the disc, in terms of the absolute time in the control bytes, with an accuracy of +/- 1 second.

The micro controller has also access to the subcode absolute time code in the q-data field of the information area.

The DPS requests sectors from the micro controller. The micro controller organizes the task of delivering data to the DPS with the collaboration of an electronic shock proof micro controller (ESPMC) block, from which the DPS receives its input data.

The DPS requests sectors using the sector address expressed in absolute time elapsed since the beginning of the user data area, in MSF (minutes, seconds, frames) units. The corresponding information in the servo system is the absolute time code part of the q-channel of a subcode frame. If no synchronisation between the subcode time code and the sector address is done, the DPS has to flush the data provided by the servo system until the requested data (sector) is received, which is time and memory consuming. If the time difference is known, the servo system can take this information into account when jumping to a requested time.

It is, therefore, an object of the present invention to provide a method for synchronizing the subcode time codes and sector addresses of data contained on a recording medium.

According to the invention, the method comprises the steps of:

- sending a number of sectors from the micro controller to the data processing system;
- requesting information about the sector headers of the received sectors from the data processing system; and
- calculating the difference between the subcode time codes and the sector addresses using the information about the sector headers.

The method has the advantage that it will speed-up the access of the data processing system to the sector information provided by the servo-system.

Favourably, the method further comprises the steps of:

- asking the data processing system for a confirmation of sector reception; and
- implementing a continuity counter in the data processing system to check if the expected sectors were received.

In this way it is ensured that no sectors were missed, which could otherwise lead to an incorrect synchronization between the subcode time codes and the sector addresses.

Advantageously, the method further comprises the step of storing the sectors in a memory. This allows further access to the sectors by subsequent additional commands from the micro controller.

According to the invention, absolute time information conveyed in the sector headers and in absolute time fields of the q-channel of the subcode frame is used for calculating the difference between the subcode time codes and the sector addresses. Using this information the synchronization between the subcode time codes and the sector addresses can easily be achieved.

Favourably, the method further comprises the step of repeating the synchronisation steps for every session on the recording medium. Since the difference can vary for different sessions on the same disc, this ensures synchronization between the subcode time codes and the sector addresses for all sessions.

According to the invention, a communication protocol for the communication between a data processing system and a micro controller defines a set of commands and messages necessary for synchronization between subcode time codes and sector addresses of data contained on a recording medium. Such a communication protocol allows to synchronize between two systems, where one system is working based on subcode information, and the other system is working based on sector information.

Advantageously, the set of commands and messages defined for the communication protocol comprises commands for scanning sectors and for reading sector data and messages for sending information on the sectors and the read sector data. From the sector data, especially the sector header, all information necessary for synchronization can be retrieved.

Favourably, a decoder for optical recording media performs a method or uses a communication protocol according to the invention.

According to the invention, the inventive method, the inventive communication protocol, and/or the inventive decoder is used in an apparatus for reading from and/or writing to optical recording media.

In the following, the implementation of a communication protocol according to the invention will be explained in more detail. Commands are sent from the micro controller to the DPS, while messages are sent from the DPS to the micro controller.

**Synchronization process:**

After the servo system has finished reading the table of content (TOC), in case of single session disc, the micro controller will start an "analyse mode" on the DPS. In case of a multisession disc, the analyse mode can be started after the TOC of each session is read, or after all TOCs are read.

Description of command and Message:

  Used command: SCAN <frame><sec><min>
  Used message: SCANM
  Three different Modes for SCAN, depending on the transmitted frame:sec:min information are used.

**Mode 1:**

Requests to get information about the first valid sector which can be received from the AIN-Mailbox (Audio-In Mailbox). Before the servo system is sending a SCAN model command to the DPS, the ESPMC memory will be flushed and then e.g. 4 subcode frames are stored by the servo system into the ESPMC memory. The storing is to be understood as follows. In a playback mode the servo system searches for the specific subcode or jumps to the corresponding position on the disc. As soon as the subcode has been found, writing of data to the ESPMC is enabled, the data coming from an error correction block. When a predetermined number of subcode-frames, e.g. four subcode-frames, has been written to the ESPMC, writing is disabled again. The micro controller does not write data to the ESPMC directly.

The storage of data is based on the subcode information. By reading the data in the ESPMC via the DPS the header information (sector) can be accessed and the time difference between the stored subcode frame and the actually obtained sector can be calculated.

Function:

After receiving the SCAN model command from the servo system, the DPS starts reading data out of the AIN-Mailbox, while counting the flushed bytes, until a SYNC word, followed by a header (1st header, i.e. 12 byte SYNC, followed by 4 bytes of non flagged data (C2_ERR = 0)) is found. The 1st header (4bytes), followed by 2336 bytes of data will be stored.

The DPS has to check now, if the following SYNC-word and the following header (2nd header, i.e. 12 byte SYNC, followed by 4 bytes of non flagged data (C2_ERR = 0)) are valid. The SYNC-word and the 2nd header have to be stored to allow subsequent SCAN mode3 commands to operate on the same ESPMC data.

The command will be aborted by the DPS if the ESPMC memory becomes empty, or in case a number of byte counter has an overflow.

The DPS will send a SCANM message to the servo system, carrying information on the 1st and 2nd valid headers, the number of counted bytes, which were flushed while reading the AIN-Mailbox until the 1st header was found, and an indicator indicating a number of byte counter overflow.

The number of counted bytes should be normally less than the number of bytes of one sector (2352). Otherwise, this would be an indication for the servo system that one sync-word, respectively header was not found.

The information on the 1st and 2nd valid headers comprises 4 byte header information (1st header) as coded on disc and 8 byte subheader information (1st header) as coded on disc, and indicators indicating whether valid 1st and 2nd headers were found.

After receiving the SCANM message, the servo system is able to calculate the time difference (in complete sectors) between subcode time code and sector addresses as follows:

$$\text{time difference} = \{[\text{min:sec:frame}] \text{ subcode time code stored in}$$

$$\text{ESPMC}\} - \{[\text{min:sec:frame}] \text{ received 1st header information}\}$$

Since only complete sectors can be taken into account by the servo system, the DPS has to search for the sync word and has to flush number of bytes when the delta is calculated. The exact delta will be:

$$\text{time difference} + \{(\text{number of byte-12}) / 2352\}$$

**Mode 2:**

Requests to search for sector [min:sec:frame] within the data which can be received from the AIN-Mailbox. Before the servo system is sending a SCAN mode2 command to the DPS, the ESPMC memory will be flushed and then the data to be analysed is stored into the ESPMC memory.

Function:

After receiving the SCAN mode2 command from the servo system, the DPS starts reading data out of the AIN-Mailbox, while counting the flushed bytes, until a SYNC word, followed by the requested header (1st header) is found. The 1st header (4bytes), followed by 2336 bytes of data will be stored.
The DPS has to check now if the following SYNC-word and the following header (2nd header) are valid. The SYNC-word and the 2nd header have to be remembered to allow subsequent SCAN mode3 commands to operate on the same ESPMC data.
The command will be aborted by the DPS if the ESPMC memory becomes empty, or in case a number of byte counter has an overflow.
The DPS will send a SCANM message to the servo system, carrying information on the 1st and 2nd valid headers, the number of counted bytes, which were flushed while reading the AIN-Mailbox until the 1st header was found, and an indicator indicating a number of byte counter overflow.
The information on the 1st and 2nd valid headers comprises 4 byte header information (1st header) as coded on disc and 8 byte subheader information (1st header) as coded on disc, and indicators indicating whether valid 1st and 2nd headers were found.
After receiving the SCANM message, the servo system is able to calculate the time difference (number of frames) between subcode time code and sector addresses as follows:

$$\text{time difference} = \{\text{Number of counted bytes mod 2352}\}$$

**Mode 3:**

Requests information about the next sector (2nd valid sector of the previous scan) which can be received from the AIN-Mailbox. The servo system sends a SCAN mode3 command to the DPS. This mode is only applicable, if scan model, scan mode2 or scan mode3 was sent before. If no scan was sent before or if no 2nd valid header was found before, the error message "command not available" will be returned.

Function

After receiving the SCAN mode3 command from the servo system, the DPS continues reading data out of the AIN-Mailbox. The data will be stored into. No bytes will be flushed.
The header and subheader information of the current sector, which was already read by the previous scan model or scan mode2 command (previous 2nd valid header becomes 1st valid header), will also be stored into.
The DPS has to check now if the following SYNC-word and the following header (new 2nd header) are valid. The SYNC-word and the 2nd header have to be stored to allow subsequent SCAN mode3 commands to operate on the same ESPMC data.
The command will be aborted by the DPS, if the ESPMC memory becomes empty.
The DPS will send a SCANM message to the servo system, carrying information about the 1st valid header and about whether a 2nd valid header was found.

The information about the 1st valid header comprises 4 byte header information as coded on disc and 8 byte subheader information as coded on disc.

**Read sector data:**

As an option, and also to be flexible for further changes in the CD-Sector formats, the following access to the cd-rom data is proposed. The command and message described below allow to read the data (header and cd-rom data) as stored by previous scan commands.
Description of command and Message:

Used command: RSECDATA (Request Sector Data)
Used message: SECDATA

The command, respectively message is only valid if a SCAN command was sent before. Otherwise an error message "command not available" will be returned.
The RSECDATA command is called with 2 bytes (lower, higher) indicating the first value which will be requested.

Function

After receiving the RSECDAT command from the servo system, the DPS sends the requested data starting at the requested first value, to the micro controller using the SECDATA message.
If the first requested value lies outside an allowed range, the error message "target not available" will be returned.
The inventive method is not limited to the communication in a CD-decoder. The method is applicable to any communication between two systems, where one system is working based on subcode information (like the servo system), and the other system is working based on sector information (like the DPS).
For a better understanding of the invention, an exemplary embodiment is specified in the following description of an advantageous configuration with reference to the figure. It is understood that the invention is not limited to this exemplary embodiment and that specified features can also expediently be combined and/or modified without departing from the scope of the present invention.

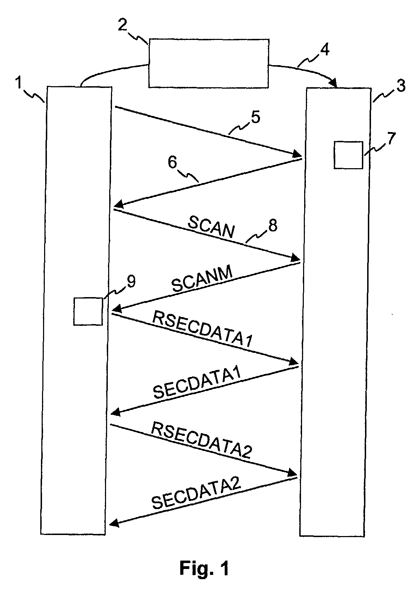

Fig. 1    shows an example for the SCAN model communication.

Fig. 1 shows an example for the SCAN model communication. Upon initialization, the micro controller 1 in a first step 4 has a number of sectors sent via a memory 2 (e.g. an electronic shock proof micro controller ESPMC) to the DPS 3. In a second step 5 the micro controller 1 asks for a confirmation on sector reception, which is sent in a further step 6 from the DPS. For this purpose a continuity counter 7 is implemented in the DPS. To allow synchronization between the subcode time codes and the sector addresses, the micro controller in a step 8 requests information about the sector header fields using a SCAN model command. The DPS sends the requested information using a SCANM message. The micro controller is now able to calculate 9 the difference between the subcode time codes and the sector addresses. In the figure, two further communications steps are shown. Using a first read sector data command RSECDATA1, the micro controller 1 requests sector data from the DPS 3, which in response sends the requested data using a first sector data message SECDATA1. Further data is then exchanged via a second read sector data command RSECDATA2 and the corresponding sector data response SECDATA2.

**Claims**

1.  Method for synchronizing subcode time codes and sector addresses of data contained on a recording medium for the communication between a data processing system (3) and a micro controller (1), comprising the steps of:

    - sending (4) a number of sectors from the micro controller (1) to the data processing system (3);
    - requesting (8) information about the sector headers of the received sectors from the data processing system (3); and
    - calculating (9) the difference between the subcode time codes and the sector addresses using the information about the sector headers.

**2.** Method according to claim 1, further comprising the steps of:

- asking (5) the data processing system (3) for a confirmation of sector reception; and
- implementing (7) a continuity counter in the data processing system (3) to check if the expected sectors were received.

**3.** Method according to claim 1 or 2, further comprising the step of storing the sectors in a memory (2).

**4.** Method according to any of claims 1-3, **characterized in that** absolute time information conveyed in the sector headers and in absolute time fields of the q-channel of the subcode frame is used for calculating the difference between the subcode time codes and the sector addresses.

**5.** Method according to any of claims 1-4, further comprising the step of repeating the synchronisation steps (4-9) for every session on the recording medium.

**6.** Communication protocol for the communication between a data processing system (3) and a micro controller (1), **characterized in that** a set of commands and messages necessary for synchronization between subcode time codes and sector addresses of data contained on a recording medium is defined.

**7.** Communication protocol according to claim 6, **characterized in that** the set of commands and messages comprises commands for scanning sectors and for reading sector data and messages for sending information on the sectors and the read sector data.

**8.** Decoder for optical recording media, **characterized in that** it performs a method according to any of claims 1-5 or uses a communication protocol according to claim 6 or 7.

**9.** Apparatus for reading from and/or writing to optical recording media, **characterized in that** it performs a method according to any of claims 1-5, uses a communication protocol according to claim 6 or 7, and/or uses a decoder according to claim 8.

**Fig. 1**

**European Patent Office**

## EUROPEAN SEARCH REPORT

Application Number

EP 02 29 2123

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 574 704 A (SHIMOSAKA WATARU) 12 November 1996 (1996-11-12) * column 3, line 1 - column 6, line 38 * --- | 1-9 | G11B27/30 G11B20/10 |
| A | US 5 936 917 A (MIN KYOUNG-SEO) 10 August 1999 (1999-08-10) * column 3, line 1-64 * --- | 1-9 | |
| A | PATENT ABSTRACTS OF JAPAN vol. 1995, no. 04, 31 May 1995 (1995-05-31) & JP 07 006522 A (SONY CORP), 10 January 1995 (1995-01-10) * abstract * ----- | 1-9 | |

| | TECHNICAL FIELDS SEARCHED (Int.Cl.7) |
|---|---|
| | G11B |

The present search report has been drawn up for all claims

| Place of search | Date of completion of the search | Examiner |
|---|---|---|
| THE HAGUE | 26 February 2003 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 394 801 A1**

## ANNEX TO THE EUROPEAN SEARCH REPORT
## ON EUROPEAN PATENT APPLICATION NO.

EP 02 29 2123

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2003

| Patent document cited in search report | | Publication date | Patent family member(s) | | Publication date |
|---|---|---|---|---|---|
| US 5574704 | A | 12-11-1996 | JP | 8055462 A | 27-02-1996 |
| US 5936917 | A | 10-08-1999 | KR | 176598 B1 | 15-04-1999 |
| | | | DE | 19708796 A1 | 20-11-1997 |
| | | | JP | 3022803 B2 | 21-03-2000 |
| | | | JP | 10069708 A | 10-03-1998 |
| JP 07006522 | A | 10-01-1995 | NONE | | |